Europäisches Patentamt

European Patent Office

Office européen des brevets

(11) Veröffentlichungsnummer: **0 374 294**

**A1**

## (12) EUROPÄISCHE PATENTANMELDUNG

(21) Anmeldenummer: 88121520.6

(22) Anmeldetag: 22.12.88

(51) Int. Cl.⁵: **G05D 1/02**

(43) Veröffentlichungstag der Anmeldung:
27.06.90 Patentblatt 90/26

(84) Benannte Vertragsstaaten:
AT BE CH DE ES FR GB GR IT LI LU NL SE

(71) Anmelder: **Siemens Aktiengesellschaft**
**Wittelsbacherplatz 2**
**D-8000 München 2(DE)**

(72) Erfinder: **Bernhardt, Heinz, Dipl.-Ing.**
**Dipl.-Math.**
**Igensdorfer Strasse 25**
**D-8500 Nürnberg 10(DE)**
Erfinder: **Goethe, Johann-Reinhard, Dipl.-Ing.**
**Kolerstrasse 33**
**D-8500 Nürnberg 30(DE)**
Erfinder: **Mossmeier, Peter, Dipl.-Ing.**
**Reichsbodenweg 35**
**D-8510 Fürth(DE)**
Erfinder: **Trautner, Friedrich**
**Fritz-Riegel-Strasse 2**
**D-8535 Emskirchen(DE)**

(54) **Anordnung zum Übertragen von Informationen an ein spurgeführtes Fahrzeug.**

(57) Bei einem führerlosen Transportsystem werden mit einem Leitband (L2 bis L5) optisch die Spurführung und die Übertragung von Zusatzinformationen vorgenommen. Das Leitband (L2 bis L5) weist dazu integrierte Wegmarken (M1 bis M6) auf. Leitband (L2 bis L5) und Wegmarken (M1 bis M6) werden von einer unter dem Fahrzeug (F) angeordneten Zeilenkamera (Z) erfaßt. Neben dem Verwenden von längs oder quer zum Leitband angeordneten Wegmarken (M1 bis M6) kann auch durch eine Variation der Leitbandbreite eine Informationsübertragung erfolgen. Ferner kann eine Überwachung vorgenommen werden, ob das Leitband (L2 bis L5) noch erfaßt wird, damit andernfalls ein automatisches Anhalten des Fahrzeugs (F) erfolgen kann.

FIG 2

# Anordnung zum Übertragen von Informationen an ein spurgeführtes Fahrzeug

Die Erfindung bezieht sich auf eine Anordnung zum Übertragen von Fahrweginformationen über ein Leitband und Zusatzinformationen über spezielle Wegmarken an ein spurgeführtes Fahrzeug. Derartige Anordnungen zum Betrieb von automatischen, fahrerlosen Transportsystemen sind beispielsweise aus den "Proceedings of the 3rd International Conference on Automated Guided Vehicle Systems, Edited by: Professor S-E Andersson, 15.-17. October 1985, Stockholm, Sweden, AGVS-3, Published by IFS (Publications) Ltd., UK," bekannt. Dabei wird mit Hilfe einer passiven Bodenanlage die Spurführung und die Übertragung von Zusatzinformationen vorgenommen, wobei diese passive Bodenanlage dazu ein durchgehendes optisch erkennbares Leitband sowie spezielle seitlich vom Leitband angebrachte Strichcodierungen aufweist. Der Sichtwinkel, mit dem eine Kamera den vor dem Fahrzeug liegenden Fahrweg abtasten muß, ist dabei verhältnismäßig groß, was Probleme hinsichtlich der Auflösung des Bildes bzw. der Menge der zu verarbeitenden Informationen nach sich zieht.

Aufgabe der Erfindung ist es, eine Anordnung der eingangs genannten Art so auszubilden, daß mit Hilfe eines einfachen Aufnahmegerätes sämtliche vom Fahrweg zu übertragenen Informationen erfaßbar sind.

Gemäß der Erfindung wird diese Aufgabe dadurch gelöst, daß die Wegmarken als Unterbrechungen des Leitbandes ausgebildet sind und daß die Fahrweginformationen und die Zusatzinformationen von einem Aufnahmegerät erfaßt werden, dessen Sichtwinkel an die maximale Breite des Leitbandes angepaßt ist.

Dadurch, daß das Aufnahmegerät im Lenkschemelbereich unterhalb des Fahrzeugs vorgesehen ist, können auch relativ kleine Kurvenradien leitlinientreu gefahren werden und es ist eine stabile Lenkregelung gewährleistet. Ein passives Bodensystem mit Leitband kann prinzipiell durch eine Vielzahl unterschiedlicher Ausführungsformen gegeben sein. Größte Bedeutung haben bisher optisch erkennbare und metallische Leitbänder gefunden. Bei metallischen Leitbändern reagieren Fahrzeugsensoren auf die durch das Metallband bedingten elektromagnetischen Feldveränderungen gegenüber der Umgebung. Bei optischen Systemen reagieren Fahrzeugsensoren auf den für das Leitband typischen optischen Kontrast zur Umgebung. Um frei von Störungen durch Bodenarmierungen, Eisenträger usw. zu sein, bietet sich die Verwendung von optischen Leitbändern für eine Vielzahl von Anwendungsfällen an. Bei optischen Spurführungssystemen kann als Aufnahmegerät u.a. eine Zeile von Fotodioden, eine Matrix- oder eine Zeilenkamera verwendet werden. Da Zeilenkameras eine wesentlich höhere Abbildungsqualität als Fotodiodenzeilen liefern und dennoch relativ preisgünstig gegenüber Matrixkameras sind, ist eine vorteilhafte Ausbildung der Erfindung dadurch gekennzeichnet, daß als Aufnahmegerät eine Zeilenkamera vorgesehen ist.

In diesem Fall erweist es sich als günstig, daß unterhalb des Fahrzeugs eine Fahrwegbeleuchtungseinrichtung installiert ist, die eine definierte Blickfeldbeleuchtung unabhängig von Umgebungseinflüssen ermöglicht. Im üblichen kann von der Zeilenkamera der Aufnahmevorgang wie bei jeder Kamera innerhalb eines vorgegebenen Belichtungsspielraumes ausgeregelt werden.

Eine weitere Ausbildung der Erfindung ist dadurch gekennzeichnet, daß die Unterbrechungen für die Wegmarken quer zum Leitband angeordnet sind. Diese, in den Verlauf des Leitbandes örtlich begrenzt integrierten Wegmarken, die ebenfalls vom Aufnahmegerät abgetastet werden, entsprechen einem einfachen, quer zur Fahrtrichtung gelesenen Digitalcode und können von der Fahrzeugsteuerung beispielsweise zur automatischen Kantenwahl oder zur relativen Standortkennung genutzt werden. Die Kantenwahl ist insbesondere vor Zusammenführungen oder Weichen vorteilhaft.

Für Wegmarken ab einem bestimmten Datengehalt reicht für eine von der Kamera auflösbare Darstellung der Platz innerhalb der Leitbandgrenzen manchmal nicht mehr ganz aus. In diesem Fall kann der Digitalcode als Balkencode über die für die Spurführung nicht genutzte Kante hinausragen, muß aber selbstverständlich noch innerhalb des Aufnahmebereichs des Aufnahmegeräts liegen. Soll die Spur in beiden Richtungen befahren werden, kann das Aufnahmegerät auf Verfolgung der Band- bzw. Mustermitte eingestellt werden. Die Längsausdehnung der Spurmarken und die Fahrzeuggeschwindigkeit können so aufeinander abgestimmt werden, daß die Marken während der Vorbeifahrt des Fahrzeugs zur Sicherheit mehrmals gelesen werden können.

Alternativ oder additiv zur Informationsverschlüsselung durch Marken, die vom Aufnahmegerät quer zur Fahrtrichtung gelesen werden, können mit den Aufnahmegeräten auch Wegmarken in Fahrtrichtung gelesen werden. Weitere Ausbildungen der Erfindung sind daher dadurch gekennzeichnet, daß die Unterbrechungen für die Wegmarken längs im Leitband angeordnet sind, wobei bei größerem Informationsgehalt durch mehrere aufeinanderfolgende Unterbrechungen eine digitale Codierung der jeweiligen Wegmarken vornehmbar ist. Die Fahrzeugsteuerung wertet dabei die Weglängen der Unterbrechungsstellen und der dazwischenliegenden kurzen Leitbandabschnitte aus. Durch einen Vergleich der sich ergebenden Muster mit zulässigen Mustern können zufällige Leitbandunterbrechungen von der Codierung unterschieden werden.

Die Erfindung ist ferner dadurch gekennzeichnet, daß durch die innerhalb vorgebbare Grenzen variierbare Breite des Leitbandes eine weitere Information übertragbar ist, die gemäß einer vorteilhaften Ausbildung der Erfindung eine Angabe über die Fahrzeugsollgeschwindigkeit beinhaltet. Damit kann in einfacher Weise beispielsweise eine Langsamfahrt in Kurven bzw. eine Schnellfahrt auf geraden Wegabschnitten ausgelöst werden.

Ferner ist die Erfindung dadurch gekennzeichnet, daß ein Anhalten des Fahrzeugs veranlaßt wird, wenn die von einem Aufnahmegerät erfaßte Breite des Leitbandes eine vorgegebene maximale Breite überschreitet oder eine vorgegebene minimale Breite unterschreitet oder wenn ein vorgegebener Weg überschritten wird, ohne das Spurinformationen detektiert werden. Damit ist gewährleistet, daß bei einem Verlassen der Spur ein sicheres Anhalten ermöglicht wird, während kurze Spurverluste die Fahrt des Fahrzeugs nicht beeinflussen. Während dieser Spurverluste wird vorteilhafterweise der zuletzt gültige Lagewert für die zur Spurführung verfolgte Kante bis zur Wiederkehr des Leitbandes beibehalten, so daß das Fahrzeug derartige Stellen ohne abrupte Lenkausschläge überfahren kann. Dies ist insbesondere dann günstig, wenn die Spurverluste durch die zu lesenden Wegmarken bedingt sind. Da diese Wegmarken gegebenenfalls eine Länge aufweisen können, die so groß ist, daß ansonsten das Fahrzeug zum Halten gezwungen würde, weist es sich gemäß einer weiteren Ausbildung der Erfindung von Vorteil, daß ein Anhalten des Fahrzeugs allerdings noch nicht veranlaßt wird, solange Zusatzinformationen vom Fahrzeug erfaßbar sind.

Ein Ausführungsbeispiel der Erfindung ist in der Zeichnung dargestellt und wird im folgenden näher erläutert. Dabei zeigen:

FIG 1 ein Fahrzeug über einem Leitband,
FIG 2 ein Blockschaltbild und
FIG 3 einige Leitbandkonfigurationen.

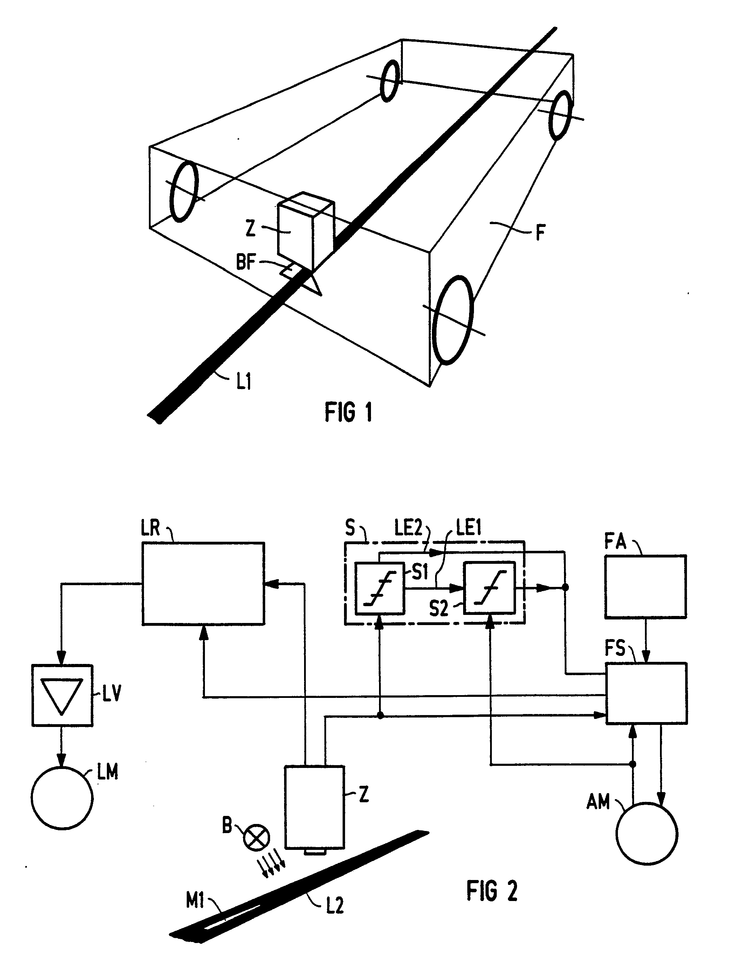

In der Darstellung gemäß FIG 1 ist ein Fahrzeug F gezeigt, das längs eines Leitbandes L1 automatisch verkehrt, wobei eine Zeilenkamera Z mit ihrem Blickfeld BF das Leitband L1 verfolgt. Die Zeilenkamera Z, die auf dem Drehschemel eines gelenkten Rads des Fahrzeugs F angeordnet ist, soll, wie im folgenden noch erläutert wird, die Spurführung und Standorterkennung für das Fahrzeug F sicherstellen sowie bedarfsweise zum Empfang weiterer Streckeninformationen dienen. Typischer Weise ist die Zeilenkamera Z 15 bis 20 cm über dem Boden senkrecht stehend markiert. Objektiv und Anbringung werden so gewählt, daß das Blickfeld quer zur Fahrtrichtung etwa 15 cm breit ist. Die Zeilenkamera Z ist in der Lage, Hell-Dunkel-Unterschiede entlang einer Bildzeile aufzunehmen. Die Kamera erfaßt Helligkeitsunterschiede zwischen einem Prüfobjekt hier dem Leitband, und dem Hintergrund sowie Helligkeitsunterschiede auf der Oberfläche des Prüfobjekts selber.

Die Erkenntnis, daß die Helligkeitsunterschiede auf der Oberfläche des Prüfobjektes selber auswertbar sind, stellt einen wesentlichen Grundgedanken der Erfindung dar.

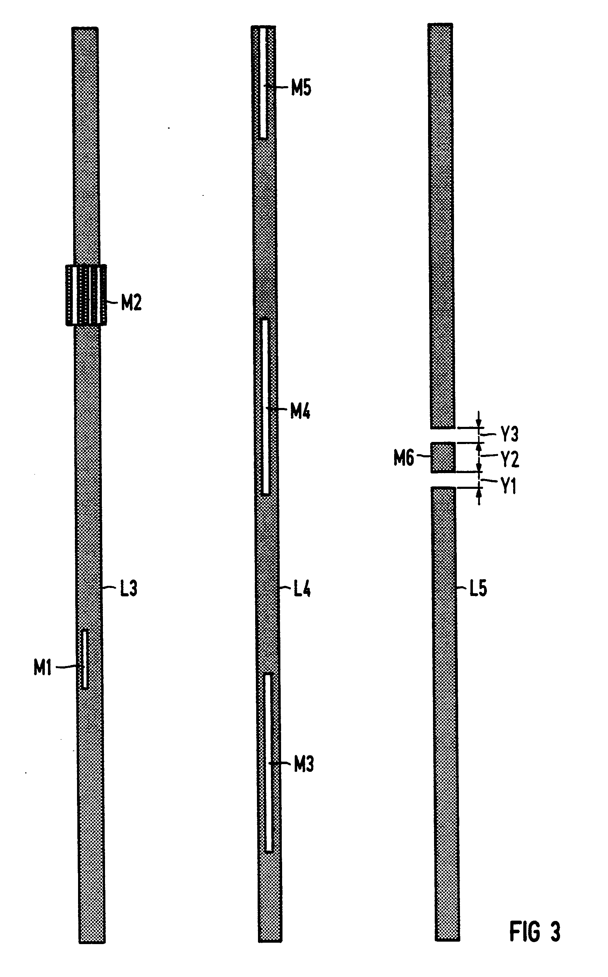

Aus der Darstellung gemäß FIG 2 ist gezeigt, daß ein Leitband demzufolge innerhalb seiner Bandbreite Zonen unterschiedlicher Helligkeit aufweisen kann. So ist auf einem Leitband L2 eine Markierung M1 vorgesehen. Die Zeilenkamera Z, deren Blickfeld mit Hilfe einer Fahrwegbeleuchtungseinrichtung B ausgeleuchtet wird, erfaßt demzufolge sowohl die äußeren Kanten des Leitbandes L2 als auch die Kanten der Markierung M1 auf dem Leitband L2.

Die äußere Kantenlage des Leitbandes L2 wird einem Lenkregler LR gemeldet, der bei Verlassen des Leitbandes L2 ein analoges Spurabweichungssignal generiert und dementsprechend über einen Lenkverstärker LV und einen Lenkmotor LM die Richtung des Fahrzeugs an den Verlauf der äußeren Kanten des Leitbandes L2 anpaßt. Die Wahl, welche der Kanten des Leitbandes L2 auszuwerten ist, kann dem Lenkregler LR über eine Fahrzeugsteuerung FS mitgeteilt werden, der über einen Fahrauftragsgeber FA die jeweiligen Fahraufträge mitgeteilt werden.

Die Fahrzeugsteuerung FS wirkt ferner auf den Antriebsmotor AM des Fahrzeugs ein und Rückmeldungen eines Weggebers am Antriebsmotor AM werden der Fahrzeugsteuerung FS mitgeteilt.

Aus den Ausgangssignalen der Zeilenkamera Z wird in der Fahrzeugsteuerung FS ferner die Lage der Markierung M1 auf dem Leitband detektiert und demzufolge eine dieser Lage zugeordnete Zusatzinformation ermittelt. Diese Zusatzinformation kann beispielsweise zur automatischen Kantenwahl vor Zusammenführungen oder zu relativen Standortkennung benutzt werden.

Um sicherzustellen, daß beim Verlassen des Leitbandes L2 oder bei Unterbrechungen des Leitbandes L2 die Fahrzeugfahrt gestoppt wird, ist eine gestrichelt angedeutete Sicherheitsschaltung S vorgesehen, die anhand der Ausgangssignale der Zeilenkamera Z in einer Schwellwertstufe S1 prüft, ob die minimale Breite des Leitbandes L1 beispielsweise durch Unterbrechungen unterschritten wird, wobei dann ein Ausgangssignal auf einer Leitung LE1 ansteht, oder ob die maximale Breite des Leitbandes L2 überschritten wird. In diesem Fall wird auf einer Leitung LE2 ein diesbezügliches Signal ausgelöst. Im ersteren Fall wird die Länge der Unterbrechungen noch daraufhin überprüft, ob ein vorgegebener tolerierbarer Weg überschritten wird. Dazu ist der Weggeber des Antriebsmotors AM mit einer zweiten Schwellwertstufe S2 verbunden. Wenn also die maximale Bandbreite überschritten ist oder für diesen ebengenannten definierten Weg die minimale Bandbreite unterschritten wird, gelangt von der Sicherheitsschaltung S ein diesbezügliches Ausgangssignal an die Fahrzeugsteuerung FS, die dann das Fahrzeug zum Halten zwingen kann.

Die Ausbildungen der Markierungen auf dem jeweiligen Leitband können vielgestaltig sein. So ist im linken Teil von FIG 3 ein Leitband L3 gezeigt, das eine Markierung M1 einfacher Art aufweist, die quer zur Leitbandrichtung angeordnet ist und aufgrund ihrer Lage eine dieser Lage eigene Information beinhaltet. Sofern ein größerer Datengehalt zu übertragen ist, können mehrere Markierungen nebeneinander angeordnet sein, die bedarfsweise sogar den Bereich der Leitbandgrenze überschreiten können, wie dies für eine Marke M2 gezeigt ist. Hierbei reicht der gewählte Balkencode über die für die Spurführung nicht genutzte Kante hinaus bzw. es ist sichergestellt, daß die Spurführung ansonsten im Verlauf dieser Marke beibehalten wird.

Im mittleren Teil von FIG 3 ist ein Leitband L4 gezeigt, das in regelmäßigen Abständen Wegmarken M3, M4 und M5 aufweist, die beispielsweise dazu genutzt werden können, um Zählmarken für eine relative Ortsbestimmung zu liefern. Zweckmäßigerweise werden dabei die durch die Wegmarken M3, M4, M5 gebildeten Fahrwegabschnitte gleich lang gewählt, so daß im Normalfall das Fahrzeug nur in den vorgegebenen Abständen einen Codewechsel erwartet. Somit kann eine äußerst störungssichere Lokalisierung ermöglicht werden.

Ferner ist es möglich, daß nur bei einem Vorliegen derartiger regelmäßiger Marken von der Fahrzeugsteuerung FS das Band überhaupt ausgewertet wird, um ein zusätzliches Kriterium zur Banderkennung zu gewährleisten.

Bei allen diesen längs zur Fahrtrichtung im Leitband angeordneten Markierungen M1 bis M5 ist jedoch die Längenausdehnung der Spurmarken und die Fahrzeuggeschwindigkeit so aufeinander abzustimmen, daß die Marken während der Vorbeifahrt des Fahrzeugs zur Sicherheit mehrere Male gelesen werden können.

Alternative zur Codierung von Informationen durch Wegmarken, die von der Kamera quer zur Fahrtrichtung gelesen werden, können mit der Zeilenkamera auch in Fahrtrichtung Wegmarken gelesen werden.

Ein Beispiel dazu ist im rechten Teil von FIG 3 gezeigt, bei dem ein Leitband L5 eine Wegmarkierung M6 aufweist, die durch zwei Unterbrechungen des Leitbandes von einer Länge Y1 und Y3 und eine dazwischenliegende, nicht unterbrochene Stelle des Leitbandes L3 von einer Länge Y2 gekennzeichnet ist. Ein derartiges Abstandsmuster kann relativ leicht aus den Ausgangssignalen der Zeilenkamera ermittelt werden. Die Fahrzeugsteuerung wertet die Weglängen der Unterbrechungsstelle und der dazwischen liegenden kurzen Leitbandabschnitte aus. Durch einen Vergleich der sich ergebenden Muster mit zulässigen Mustern können zufällige Leitbandunterbrechungen von der Codierung unterschieden werden.

Sofern seitens der Fahrzeuge keine Weglängen gemessen werden können, könnten allerdings auch alternativ Zeit- und Geschwindigkeitsmessungen kombiniert werden oder es könnten die ermittelten Zeitwerte für die unterbrochenen bzw. nicht unterbrochenen Wegabschnitte zueinander in Beziehung gesetzt werden, um die Messungen weg- bzw. geschwindigkeitsunabhängig zu machen.

Sowohl das Leitband als auch die Spuren können einzeln oder gemeinsam durch fertig eingefärbte Klebebänder realisiert sein. Die eingangs genannte Variation der Leitbandbreite zur Geschwindigkeitssteuerung des Fahrzeugs ist der Übersichtlichkeit halber im Ausführungsbeispiel nicht im einzelnen dargestellt.

## Ansprüche

1. Anordnung zum Übertragen von Fahrweginformationen über ein Leitband und Zusatzinformationen über spezielle Wegmarken an ein spurgeführtes Fahrzeug, **dadurch gekennzeichnet,** daß die Wegmarken (M1 bis M6) als Unterbrechungen des Leitbandes (L2 bis L5) ausgebildet sind und daß die Fahrweginformationen und die Zusatzinformationen von einem Aufnahmegerät (Z) erfaßt werden, dessen Sichtwinkel (B) an die maximale Breite des Leitbandes (L2 bis L5) angepaßt ist.

2. Anordnung nach Anspruch 1, **dadurch gekennzeichnet,** daß das Aufnahmegerät (Z) im Lenkschemelbereich unterhalb des Fahrzeugs (F) vorgesehen ist.

3. Anordnung nach Anspruch 1 oder 2, **dadurch gekennzeichnet,** daß als Aufnahmegerät eine Zeilenkamera (Z) vorgesehen ist.

4. Anordnung nach Anspruch 1, 2 oder 3, **dadurch gekennzeichnet,** daß unterhalb des Fahrzeugs (F) eine Fahrwegbeleuchtungseinrichtung (B) installiert ist.

5. Anordnung nach einem der vorstehenden Ansprüche, **dadurch gekennzeichnet,** daß die Unterbrechungen für die Wegmarken (M1 bis M5) quer zum Leitband (L2 bis L4) angeordnet sind.

6. Anordnung nach Anspruch 5, **dadurch gekennzeichnet,** daß jeweils mehrere nebeneinander angeordnete Unterbrechungen des Leitbandes (L3) eine digitale Codierung der jeweiligen Wegmarke (M2) vornehmen.

7. Anordnung nach Anspruch 1, 2, 3 oder 4, **dadurch gekennzeichnet,** daß die Unterbrechungen für die Wegmarken (M6) längs im Leitband (L5) vorgesehen sind.

8. Anordnung nach Anspruch 7, **dadurch gekennzeichnet,** daß mehrere aufeinanderfolgende Unterbrechungen eine digitale Codierung der jeweiligen Wegmarke (M6) vornehmen.

9. Anordnung zum Übertragen von Fahrweginformationen über ein Leitband und Zusatzinformationen über spezielle Wegmarken an ein spurgebundenes Fahrzeug, **dadurch gekennzeichnet,** daß durch die innerhalb vorgebbarer Grenzen variable Breite des Leitbandes eine weitere Information übertragbar ist.

10. Anordnung nach Anspruch 9, **dadurch gekennzeichnet,** daß die weitere Information eine Angabe über die Fahrzeugsollgeschwindigkeit beinhaltet.

11. Anordnung zum Übertragen von Fahrweginformationen über ein Leitband und Zusatzinformationen über spezielle Wegmarken an ein spurgebundenes Fahrzeug, **dadurch gekennzeichnet,** daß ein Anhalten des Fahrzeugs (F) veranlaßt wird, wenn die von einem Aufnahmegerät (Z) erfaßte Breite des Leitbandes (L2 bis L5) eine vorgegebene maximale Breite überschreitet oder eine vorgegebene minimale Breite unterschreitet oder wenn ein vorgebbarer Weg überschritten wird, ohne das Spurinformationen detektiert werden.

12. Anordnung nach Anspruch 11, **dadurch gekennzeichnet,** daß ein Anhalten des Fahrzeugs (F) allerdings noch nicht veranlaßt wird, solange Zusatzinformationen vom Fahrzeug (F) erfaßbar sind.

FIG 1

FIG 2

88 P 3 5 6 1 E

M5

M2

M4

L3

M1

L4

M6

Y3

Y2

Y1

L5

M3

FIG 3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| X | GB-A-2186398 (YOSHIDA KOGYO K.K.)<br>* Zusammenfassung *<br>* Seite 3, Zeile 70 - Zeile 102; Figuren 1-13 * | 1, 3, 4, 7 | G05D1/02 |
| Y | | 2, 8-11 | |
| | --- | | |
| X | FR-A-2406245 (ENGINS MATRA)<br>* Seite 5, Zeile 17 - Zeile 34 *<br>* Seite 10, Zeile 15 - Zeile 22; Figuren 1, 4 * | 1, 4, 5 | |
| Y | | 6 | |
| | --- | | |
| Y | EP-A-012554 (LEAR SIEGLER,INC.,)<br>* Seite 5, Zeile 32 - Seite 6, Zeile 16 *<br>* Seite 8, Zeile 33 - Seite 9, Zeile 1; Figuren 2, 16 * | 2, 11 | |
| | --- | | |
| Y | GB-A-2143969 (MANNESMANN AKTIENGESELLSCHAFT)<br>* Zusammenfassung; Figur 1 *<br>* Seite 3, Zeile 47 - Zeile 76 * | 6, 8 | |
| | --- | | |
| Y | PATENT ABSTRACTS OF JAPAN<br>vol. 10, no. 177 (P-470)(2233) 21 Juni 1986,<br>& JP-A-61 25220 (DAIFUKU CO LTD) 4 Februar 1986,<br>* siehe das ganze Dokument * | 8 | |
| | --- | | RECHERCHIERTE SACHGEBIETE (Int. Cl.5 ) |
| Y | PATENT ABSTRACTS OF JAPAN<br>vol. 10, no. 89 (P-444)(2146) 8 April 1986,<br>& JP-A-60 225208 (TOSHIBA K.K.) 9 November 1985,<br>* siehe das ganze Dokument * | 9, 10 | G05D |
| | --- | | |
| A | EP-A-195191 (INVENTIO AG)<br>----- | | |

Der vorliegende Recherchenbericht wurde für alle Patentansprüche erstellt

| Recherchenort | Abschlußdatum der Recherche | Prüfer |
|---|---|---|
| DEN HAAG | 13 JULI 1989 | HELOT H.V. |